# EUROPEAN PATENT APPLICATION

(11) **EP 2 650 559 A1**
(43) Date of publication of application: **16.10.2013**
(21) Application number: 11847003.8
(22) Date of filing: 28.03.2011
(51) Int. Cl.: F16F 15/04, F16F 9/05

(54) **AIR SPRING AND METHOD FOR PRODUCING SAME**

(30) Priority: 09.12.2010 JP 2010274699
(71) Applicant: Toyo Tire & Rubber Co., Ltd., Osaka-shi, Osaka 550-8661 (JP)
(72) Inventor: YASUNAGA,Yuki, Osaka 550-8661 (JP)
(74) Representative: Kloiber, Thomas
(86) International application number: PCT/JP2011/057603
(87) International publication number: WO 2012/077364

(57) **Abstract**

An object of this invention is to provide an air spring in which airtightness can be ensured without complicating the structure thereof. Specifically, an air spring includes an upper face plate 1, a lower face plate 2, a tubular flexible member 3 interposed between the upper face plate 1 and lower face plate 2, and an elastic stopper 4 that is attached to the lower face plate 2. The lower face plate 2 and the elastic stopper 4 are integrally bonded to each other. More preferably, the lower face plate 2 includes a bead receiving section 8 in which a bead section 3b at a lower end of the flexible member is fitted, and a flange section 9 that is formed at a position that is further on an outer side in a radial direction than the bead receiving section 8. A rubber seat 18 is installed on the flange section 9 to ensure that the flange section 9 and a flexible section 3c do not contact each other. The rubber seat 18 is bonded to the flange section 9 by vulcanization.

## Description

### Technical Field

The present invention relates to an air spring that is used for a railway vehicle or the like and a method for producing the same.

### Background Art

As a conventional air spring that is used for a railway vehicle or the like, as shown in Figure 5 of Patent Literature 1, an air spring is known that includes an upper face plate that is attached to the vehicle body of the vehicle, a lower face plate that is disposed on a wheel side below the upper face plate, a rubber flexible member (bellows) that is provided across the upper face plate and the lower face plate, and an elastic stopper that is interposed between the lower face plate and a support frame on the wheel side. The aforementioned elastic stopper regulates fluctuations in the vertical direction of the vehicle body. In general, a laminated rubber structure in which a rubber layer and a steel plate are alternately laminated is used as the elastic stopper.

A top plate is provided at a top section of the elastic stopper, and the lower face plate is fixed to the top plate. More specifically, a bead receiving section into which a bead section at a lower end of the flexible member fits is formed in the lower face plate, and a through hole through which a bolt can be inserted is formed at a position that is further on an inner side in a radial direction than the bead receiving section.

In addition, in the top plate, a threaded hole into which a bolt can be screwed is formed at a position that corresponds to the through hole of the lower face plate. In a state in which the lower face plate and the top plate have been joined together, the lower face plate is fixed to the elastic stopper by inserting a bolt through the through hole in the lower face plate and screwing the bolt into the threaded hole in the top plate. Air is supplied to the inside of the flexible member to maintain the inside of the flexible member in a pressurized state. The air spring is configured to exert a buffering function with respect to a load or vibrations in the vertical direction by means of the flexible member that is inflated with pressurized air and the elastic stopper.

### Citation List

### Patent Literature

Patent Literature 1: Japanese Patent Laid-Open No. 10-288236

### Summary of Invention

### Technical Problem

As described above, since the inside of the flexible member is maintained in a pressurized state, it is necessary for the overall flexible member including the upper face plate and the lower face plate to be airtight. However, in Patent Literature 1, since an insertion hole for a bolt is formed in a lower face plate portion that is related with the airtightness of the flexible member, there is a risk of pressurized air passing through the insertion hole and leaking out from a gap between the lower face plate and the top plate.

Therefore, conventionally, a configuration has been adopted in which an annular groove section is formed in at least one of the lower face plate and the top plate at the joining faces of the lower face plate and the top plate, and airtightness at the two joining faces is ensured by joining the lower face plate and the top plate in a state in which an O-ring has been inserted into the annular groove section. Thus, an annular groove section and an O-ring are necessary to ensure the airtightness of the flexible member, and there has been the problem that the structure as an air spring is complicated by a corresponding amount.

The present invention has been made in consideration of the above problem, and an object of the invention is to provide an air spring in which airtightness can be ensured without complicating the structure thereof.

### Solution to Problem

An air spring according to the present invention for solving the above described problem includes: an upper face plate; a lower face plate; a tubular flexible member that is interposed between the upper face plate and the lower face plate; and an elastic stopper that is attached to the lower face plate; wherein the lower face plate and the elastic stopper are integrally bonded to each other.

According to the above described configuration, by integrally bonding the lower face plate and the elastic stopper to each other, it is no longer necessary to form a through hole in a lower face plate portion that is related with the airtightness of the flexible member (a portion at a position that is further on an inner side in a radial direction than the bead receiving section), and airtightness of the flexible member can be ensured without complicating the structure of the air spring. Note that, by forming projections and depressions in advance in the lower face plate at the joining face with the elastic stopper, the bonding area with the elastic stopper can be increased, and an adequate adhesive force can be ensured.

The elastic stopper is formed by an elastic body. Natural rubber, synthetic rubber, elastomer or the like that are hardened by vulcanization can be mentioned as specific examples of the elastic body, and these can be used independently or two or more kinds thereof can be combined and used. The elastic stopper may be composed of only an elastic body in a block state, and it is also possible to form the elastic stopper as a laminated structure in which an elastic body and a reinforcing material such as a steel plate are alternately laminated.

The lower face plate and the elastic stopper can be integrally bonded by bonding the lower face plate and the elastic stopper together using an adhesive. It is also possible to integrally bond the lower face plate and the elastic stopper to each other by bonding the lower face plate and the elastic stopper together by vulcanization when forming the elastic stopper by vulcanization. In this case, since the elastic body constituting the elastic stopper is vulcanized and directly bonded to the lower face plate, there is the advantage that an adhesive is not required.

According to the present invention, the flexible member includes bead sections that are formed at an upper end and a lower end thereof, and a tubular flexible section that is formed between the two bead sections; the lower face plate includes a bead receiving section in which the bead section fits, and a flange section that is formed at a position that is further on an outer side in a radial direction than the bead receiving section; and the bead section at the lower end of the flexible member is fitted into the bead receiving section.

In the above described configuration, because there is a concern that the durability of the flexible member will be affected by the flexible section of the flexible member rubbing against the hard flange section when the air spring is displaced in the horizontal direction, it is preferable to install a rubber seat on the flange section to ensure that the flange section and the flexible section do not contact each other.

The rubber seat can be an independent member that is a separate element from the flange section. In this case, it is necessary for the material used as the rubber seat to have rigidity that does not give rise to an abnormal deformation when an external force acts thereon, and that maintains a fixed state with respect to the flange section. That is, it is necessary for the rubber seat to be fixable to the surface of the flange section without any play so that the rubber seat does not become misaligned.

As a specific configuration in a case where the rubber seat is provided as an independent member, for example, a configuration can be adopted in which rigidity is ensured by forming an annular body having a laminated structure that is composed of a rubber layer on an upper face side and a metal reinforcement layer on a lower face side, in which the annular body is formed in a shape that can be fitted in the bead receiving section or in a shape that can be fitted at an outer circumferential end of the flange section. Furthermore, the rigidity of the rubber seat can be increased and deformation can be reliably prevented by embedding an annular reinforcing material such as a metal wire in the rubber layer of the rubber seat.

It is also possible to form the rubber seat integrally with the flange section. Specifically, the rubber seat can be bonded to the flange section. In this case, since the flange section can act as a metal reinforcement layer and misalignment of the rubber seat can be effectively prevented, the rubber seat can be composed of only an elastic body such as vulcanized rubber.

That is, by forming the rubber seat integrally with the flange section, compared to a case where the rubber seat is formed as an independent member that is separate from the flange section, the structure can be simplified, which is extremely advantageous in terms of cost and productivity. Note that, in the case of bonding the rubber seat to the flange section, if bonding the lower face plate and the elastic stopper to each other by vulcanization, it is preferable to also bond the rubber seat to the flange section by vulcanization.

That is, a method for producing an air spring according to the present invention is a method for producing an air spring that includes an upper face plate, a lower face plate, a tubular flexible member that is interposed between the upper face plate and the lower face plate, and an elastic stopper that is attached to the lower face plate, wherein: the flexible member includes bead sections that are formed at an upper end and a lower end thereof, and a tubular flexible section that is formed between the two bead sections; the lower face plate includes a bead receiving section in which the bead section fits, and a flange section that is formed at a position that is further on an outer side in a radial direction than the bead receiving section; the bead section at the lower end of the flexible member is fitted into the bead receiving section; and a rubber seat is installed on the flange section to ensure that the flange section and the flexible section do not contact each other; wherein, when forming the elastic stopper by vulcanization, the elastic stopper and the rubber seat are bonded by vulcanization to the lower face plate.

By adopting a configuration in which the elastic stopper and the rubber seat are bonded by vulcanization to the lower face plate in this manner, when setting and vulcanizing the unvulcanized elastic body and the lower face plate in a molding die, the unvulcanized rubber seat can also be disposed at the flange section of the lower face plate and vulcanized inside the molding die. Accordingly, time and labor required for separately bonding the rubber seat can be eliminated, and furthermore the adhesive force between the lower face plate and the elastic stopper and the adhesive force between the flange section and the rubber seat can be made strong forces by the bonding by vulcanization.

### Advantageous Effects of Invention

According to the present invention, since the lower face plate and the elastic stopper are integrally bonded, it is no longer necessary to form a through hole in a lower face plate portion that is related with the airtightness of the flexible member, and airtightness of the flexible member can be ensured without complicating the structure of the air spring.

### Brief Description of Drawings

[Figure 1] Figure 1 is a longitudinal section that illustrates an embodiment of an air spring according to the present invention.
[Figure 2] Figure 2 is an enlarged view of a principal portion that illustrates the appearance of a rubber seat that is different to a rubber seat shown in Figure 1.
[Figure 3] Figure 3 is a sectional view of a molding die that forms an elastic stopper by vulcanization.

### Description of Embodiment

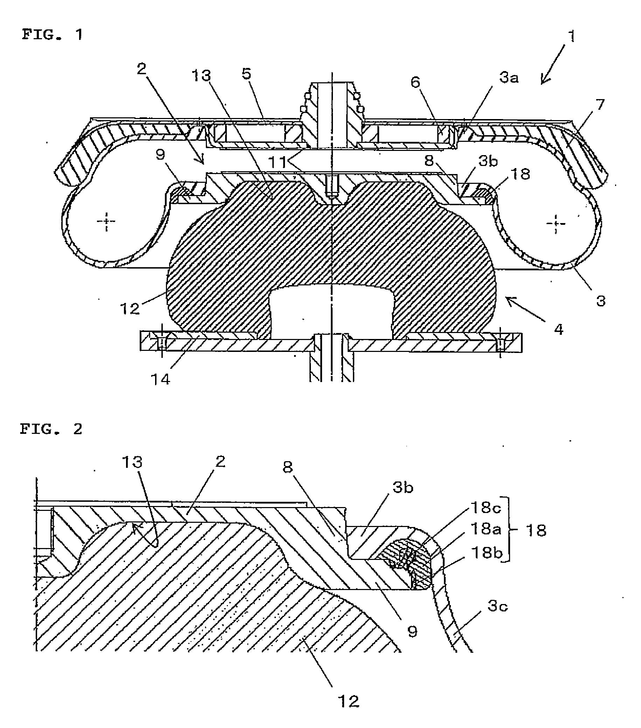

An embodiment of the present invention is described hereunder based on the drawings. Figure 1 is a longitudinal section that illustrates an embodiment of an air spring for a railway vehicle according to the present invention.

The air spring includes an upper face plate 1 that is attached to a body of a vehicle, a lower face plate 2 that is disposed on a wheel side below the upper face plate 1, a tubular flexible member 3 that is interposed between the upper face plate 1 and the lower face plate 2, and an elastic stopper 4 that is interposed between the lower face plate 2 and a support frame on the wheel side.

According to the present embodiment, a rubber bellows is used as the flexible member 3. The flexible member 3 is made of laminated rubber in which a reinforced rubber layer in which a reinforcing cord has been embedded is used as an intermediate layer, and thick bead sections 3a and 3b at which the reinforced rubber layer is wound around a bead core are formed at an upper end and a lower end of the flexible member 3. That is, the flexible member 3 includes the bead sections 3a and 3b that are formed at the upper and lower ends thereof, and a thin tubular flexible section 3c that is composed of laminated rubber that is formed between the bead sections 3a and 3b.

As shown in Figure 1, the upper face plate 1 includes a disc-shaped support plate 5 that is made of metal, a cylindrical bead receiving section 6 that protrudes towards the lower face plate at a center part of the support plate 5, and a protective rubber layer 7 that is provided at a portion that is further on an outer side in the radial direction than the bead receiving section 6 on the undersurface of the support plate 5.

The lower face plate 2 is formed of a metallic material in a disc shape. A cylindrical bead receiving section 8 that protrudes towards the upper face plate 1 is formed at a center part of the lower face plate 2, and a flange section 9 is formed at a position that is further on an outer side in the radial direction than the bead receiving section 8. The bead receiving sections 6 and 8 also fulfill a function of ensuring safe running of the vehicle when air has escaped from inside the flexible member 3 (when the flexible member 3 is deflated), which is realized by the bead receiving section 6 sitting on the bead receiving section 8.

A sliding sheet 11 is bonded to each of the contacting faces at which the bead receiving sections 6 and 8 contact at a time of deflation. The sliding sheet 11 is made of thermoplastic or thermosetting synthetic resin that can be formed into a thin and strong sheet, and a material that has a small coefficient of friction is used therefor. As specific examples thereof, fluorocarbon resin, polyethylene, and polypropylene can be mentioned. A fluorocarbon resin sheet is used according to the present embodiment.

The elastic stopper 4 includes a rubber molding 12 made of vulcanized rubber in a block state, and a base plate 14 that is attached to a bottom section of the rubber molding 12. The rubber molding 12 is made in the shape of a thick inverted bowl, and the base plate 14 is bonded by vulcanization to the rubber molding 12.

The lower face plate 2 is also bonded by vulcanization to the rubber molding 12, similarly to the base plate 14, so that the lower face plate 2 and the elastic stopper 4 are united. An annular concave section 13 is formed on a rear face side (side of the joining face with the elastic stopper 4) of the lower face plate 2. As a result, the bonding area between the lower face plate 2 and the elastic stopper 4 is increased, and the lower face plate 2 and the elastic stopper 4 can thus be bonded more securely.

A rubber seat 18 is installed on the flange section 9. The rubber seat 18 is formed in a ring shape so as to cover a corner part on an outer circumferential side of the flange section 9 from an outer circumferential side face of the flange section 9 to an end on the outer circumferential side on the upper face of the flange section 9. The sectional shape of the rubber seat 18 is formed in a substantially "L" shape. The surface of the rubber seat 18 is formed as a moderately curved surface.

According to the present embodiment, the rubber seat 18 is formed from vulcanized rubber, and is integrally bonded by vulcanization to the flange section 9. As a result, the rubber seat 18 is interposed between the flange section 9 and the flexible section 3c so that, even if the air spring is displaced, misalignment of the rubber seat 18 does not occur. Further, a structure is adopted in which the flexible section 3c and the flange section 9 do not directly contact each other.

Note that, as shown in Figure 2, a configuration can also be adopted in which the rubber seat 18 is an independent member and is not bonded to the flange section 9. However, in this case, if the rubber seat 18 is composed of only vulcanized rubber, the rubber seat 18 is liable to deform, and there is a risk that an abnormal deformation will occur when an external force acts thereon and eventually the rubber seat 18 will be misaligned and slip off from the flange section 9.

Accordingly, when adopting a configuration in which the rubber seat 18 is an independent member, for example, as shown in Figure 2, it is necessary to enhance the strength thereof such as by forming the rubber seat 18 as a laminated structure in which a rubber layer 18a on an upper face side and a metal reinforcement layer 18b on a lower face side are integrally laminated. In addition, by embedding an annular reinforcing material 18c such as a metal wire in the rubber layer 18a of the rubber seat 18, the strength of the rubber seat 18 can be further enhanced and deformation thereof can be prevented with greater reliability, and the rubber seat 18 can be securely retained at the flange section 9. As described above, the structure can be simplified by bonding the rubber seat 18 to the flange section 9 by vulcanization.

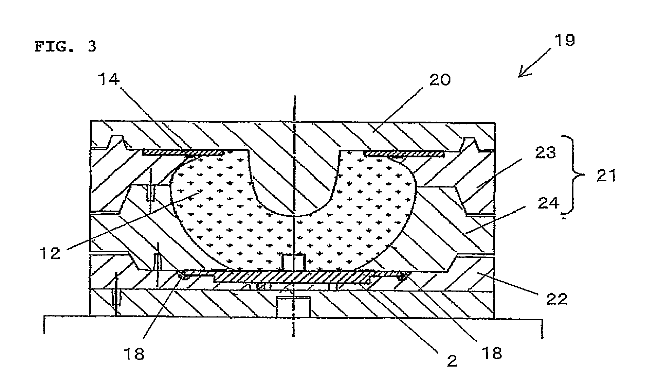

A method for bonding the elastic stopper 4 and the rubber seat 18 to the lower face plate by vulcanization will now be described. Figure 3 is a sectional view that illustrates an example of a molding die for bonding the elastic stopper 4 by vulcanization. After a molding die 19 is disposed between an upper and lower pair of heating plates of a transfer molding machine, the molding die 19 is sandwiched by the heating plates and unvulcanized rubber inside the molding die is heated and pressed and thereby formed by vulcanization. It is assumed that it is possible to divide the molding die 19 into an upper die 20, a middle die 21 and a lower die 22 in the vertical direction.

As described in the foregoing, the rubber molding 12 is made in the shape of a thick inverted bowl. Therefore, to facilitate demolding of the molded rubber molding 12 from the molding die 19, it is assumed that it is possible to divide the middle die 21 into a first middle die 23 and a second middle die 24 in the vertical direction in conformity with the shape of the rubber molding 12.

In addition, after formation by vulcanization, to facilitate mold opening and to also make it possible to take out the elastic stopper 4 in which the lower face plate 2 and the base plate 14 are integrally formed from the molding die, it is assumed that the second middle die 24 can be divided into two parts in the transverse direction. Likewise, it is assumed that the first middle die 23 can be also divided into two parts in the transverse direction.

A round concave section is formed in the center of the upper face of the lower die 22, and the disc-shaped lower face plate 2 that is to be integrally bonded by vulcanization to the top section of the elastic stopper 4 after formation by vulcanization is set in the concave section. Note that, in Figure 3, a case is illustrated in which a plate with a flat shape in which the annular concave section 13 is not formed at the joining face with the elastic stopper is used as the lower face plate 2.

In the lower die 22, in a state in which the lower face plate 2 has been set, a space is formed from the outer circumferential side face of the lower face plate 2 (flange section 9) to an outer end in the radial direction of the upper face of the lower face plate 2. Hence, first, unvulcanized rubber is filled into the aforementioned space, thereafter the lower face plate 2 is set, and the second middle die 24 is then set thereon. Note that unvulcanized rubber in this portion is vulcanized to form the rubber seat 18.

In a state in which the second middle die 24 has been set, unvulcanized rubber is filled into the inside thereof. It is favorable to use belt-shaped rubber as the unvulcanized rubber and to spread the rubber all over the inside of the second middle die 24. After filling the unvulcanized rubber up to the second middle die 24, the first middle die 23 is set, and unvulcanized rubber is then filled therein until filling the inside of the first middle die 23.

Thereafter, the base plate 14 is set, and the upper die is set from above the base plate 14 to hermetically seal the molding die 19. Subsequently, it is sufficient to sandwich the molding die 19 between the heating plates of the transfer molding machine to subject the unvulcanized rubber inside the molding die 19 to heating and vulcanization. By the above described method, when forming the elastic stopper by vulcanization, the elastic stopper 4 and the rubber seat 18 can be bonded by vulcanization to the lower face plate 2.

### Industrial Applicability

The present invention can be advantageously utilized for an air spring that is mounted in a railway vehicle.

### Reference Signs List

- .1: Upper face plate
- 2: Lower face plate
- 3: Flexible member
- 4: Elastic stopper
- 5: Support plate
- 6, 8: Bead receiving section
- 7: Protective rubber layer
- 9: Flange section
- 11: Sliding sheet
- 12: Rubber molding
- 13: Annular concave section
- 14: Base plate
- 18: Rubber seat
- 19: Molding die
- 20: Upper die
- 21: Middle die
- 22: Lower die
- 23: First middle die
- 24: Second middle die

## Claims

1. An air spring, comprising:
an upper face plate;
a lower face plate;
a tubular flexible member that is interposed between the upper face plate and the lower face plate; and
an elastic stopper that is attached to the lower face plate;
wherein the lower face plate and the elastic stopper are integrally bonded to each other.

2. The air spring according to claim 1, wherein the lower face plate and the elastic stopper are bonded by vulcanization.

3. The air spring according to claim 2, wherein:
the flexible member comprises bead sections that are formed at an upper end and a lower end thereof, and a tubular flexible section that is formed between the two bead sections;
the lower face plate comprises a bead receiving section in which the bead section fits, and a flange section that is formed at a position that is further on an outer side in a radial direction than the bead receiving section;
the bead section at the lower end of the flexible member is fitted into the bead receiving section;
a rubber seat is installed on the flange section to ensure that the flange section and the flexible section do not contact each other; and
the rubber seat is bonded by vulcanization to the flange section.

4. A method for producing an air spring that comprises:
an upper face plate,
a lower face plate,
a tubular flexible member that is interposed between the upper face plate and the lower face plate, and
an elastic stopper that is attached to the lower face plate,
wherein:
the flexible member comprises bead sections that are formed at an upper end and a lower end thereof, and a tubular flexible section that is formed between the two bead sections,
the lower face plate comprises a bead receiving section in which the bead section fits, and a flange section that is formed at a position that is further on an outer side in a radial direction than the bead receiving section,
the bead section at the lower end of the flexible member is fitted into the bead receiving section, and
a rubber seat is installed on the flange section to ensure that the flange section and the flexible section do not contact each other;
wherein, when forming the elastic stopper by vulcanization, the elastic stopper and the rubber seat are bonded by vulcanization to the lower face plate.
